# EUROPEAN PATENT SPECIFICATION

(11) **EP 4 231 068 B1**
(45) Date of publication and mention of the grant of the patent: **19.02.2025**
(21) Application number: 21880113.2
(22) Date of filing: 12.10.2021
(51) Int. Cl.: G02B 6/255

(54) **TRAY FOR FUSION SPLICING WORK AND FUSION SPLICER SET**
SCHALE FÜR FUSIONSSPLEISSARBEIT UND FUSIONSSPLEISSSATZ
PLATEAU POUR TRAVAIL D'ÉPISSAGE PAR FUSION ET ENSEMBLE D'ÉPISSAGE PAR FUSION

(30) Priority: 15.10.2020 JP 2020174185
(43) Date of publication of application: 23.08.2023
(73) Proprietor: Sumitomo Electric Optifrontier Co., Ltd., Yokohama-shi Kanagawa 244-8589 (JP)
(72) Inventor: RYONO, Yuta, Yokohama-shi, Kanagawa 244-8589 (JP); JOKO, Kazufumi, Yokohama-shi, Kanagawa 244-8589 (JP); SASAKI, Tomoyoshi, Yokohama-shi, Kanagawa 244-8589 (JP); SATO, Ryuichiro, Yokohama-shi, Kanagawa 244-8589 (JP)
(74) Representative: Boult Wade Tennant LLP
(86) International application number: PCT/JP2021/037758
(87) International publication number: WO 2022/080375

(56) References cited:
- WO-A1-2014/104180
- WO-A1-2016/042671
- WO-A1-2017/199961
- CN-A- 105 842 789
- CN-A- 105 842 789
- CN-A- 106 908 900
- JP-A- 2006 201 305
- JP-A- 2014 074 796
- JP-U- S5 920 687

## Description

### Technical Field

The present disclosure relates to a tray for fusion splicing work and a fusion splicer set. This application is based upon and claims the benefit of priority from Japanese Patent Application No. 2020-174185 filed on October 15, 2020.

### Background Art

Patent Literature 1 discloses an example of a work table for performing fusion splicing for an optical fiber. The work table includes a bracket portion for fixing a fusion splicer main body and a base portion. The base portion has a mounting portion on which the bracket portion is mounted and a support portion supported by an operator, and the mounting portion and the support portion form an L shape when fusion splicing is performed. Patent Literature 2 discloses another example of a work table. Patent Literature 3 discloses a housing case for a fusion splicer that also functions as a work table.

### Citation List

### Patent Literature

[Patent Literature 1] PCT International Publication No. WO2014/104180
[Patent Literature 2] Japanese Unexamined Patent Publication No. 2014-074796
[Patent Literature 3] PCT International Publication No. WO2016/042671
[Patent Literature 4] Japanese Unexamined Patent Publication No. 2011-145528
[Patent Literature 5] Japanese Unexamined Patent Publication No. 2007-193097
[Patent Literature 6] JP 2006 201305 A discloses work boxes for storing an optical fiber fusion splicing machine and related tools.

### Summary of Invention

The invention provides a tray for fusion splicing work according to independent claim 1. Further embodiments are provided by the dependent claims.

### Brief Description of Drawings

[FIG. 1] FIG. 1 is a perspective view illustrating a housing case according to an embodiment.
[FIG. 2] FIG. 2 is a perspective view illustrating a fusion splicer set that includes a housing case with a lid body opened with respect to a case main body.
[FIG. 3] FIG. 3 is a perspective view illustrating the housing case with various devices such as a fusion splicer housed therein omitted from illustration.
[FIG. 4] FIG. 4 is an enlarged view of a region A, which is a part of the case main body surrounded by a dashed line illustrated in FIG. 2, with a sealing member omitted from illustration.
[FIG. 5] FIG. 5 is an enlarged view of the region A, which is a part of the case main body surrounded by a dashed line illustrated in FIG. 2, with a sealing member illustrated.
[FIG. 6] FIG. 6 is an enlarged view of a region B, which is a part of the lid body surrounded by a dashed line illustrated in FIG. 2, with a sealing member omitted from illustration.
[FIG. 7] FIG. 7 is an enlarged view of the region B, which is a part of the lid body surrounded by a dashed line illustrated in FIG. 2, with a sealing member illustrated.
[FIG. 8] FIG. 8 is a diagram illustrating a state in which a cable is sandwiched between two sealing members.
[FIG. 9] FIG. 9 is a perspective view of a tray from a side of a first region.
[FIG. 10] FIG. 10 is a perspective view of a tray from a side of a second region.
[FIG. 11] FIG. 11 is a cross-sectional view of the housing case along line XI-XI illustrated in FIG. 2.
[FIG. 12] FIG. 12 is a perspective view illustrating a first body contact member.
[FIG. 13] FIG. 13 is an enlarged view of a recess of the first body contact member and a protrusion of a locking member in a state in which the first body contact member is housed.
[FIG. 14] FIG. 14 is a perspective view illustrating a second body contact member.
[FIG. 15] FIG. 15 is a perspective view illustrating the tray with the first body contact member and the second body contact member unfolded.

### Description of Embodiments

### [Problems to be solved by the present disclosure]

In a case where the tray is provided with a body contact member (corresponding to the support portion of Patent Literature 1) that comes into contact with the body of the operator using the fusion splicer, the stability of the tray during the fusion splicing work is improved. However, when the tray is housed in the housing case, the body contact member is bulky and may not be easily housed. Therefore, it is desired to develop a tray that can be easily housed in the housing case while maintaining the stability during the fusion splicing work.

An object of the present disclosure is to provide a tray for fusion splicing work that can be easily housed in a housing case while maintaining stability during fusion splicing work.

### [Effects of the present disclosure]

According to the aspect of the present disclosure, it is possible to provide a tray for fusion splicing work that can be easily housed in a housing case while maintaining stability during fusion splicing work.

### [Description of embodiment of the present disclosure]

First, contents of an embodiment of the present disclosure will be listed and described. A tray for fusion splicing work according to an embodiment of the present disclosure is a tray used for fusion splicing work for an optical fiber, and includes a tray main body and a first body contact member. The tray main body includes a pair of long wall portions opposing each other and extending along a first direction, and a pair of short wall portions opposing each other and extending along a second direction intersecting with the first direction. The tray main body is provided with a placement portion on which a fusion splicer is able to be placed within a rectangular region defined by the pair of long wall portions and the pair of short wall portions. The first body contact member includes an outer surface configured to come into contact with a body of an operator using the fusion splicer and is attached to the tray main body on a side of one long wall portion of the pair of long wall portions. The first body contact member is able to be transitioned between an unfolded state in which the outer surface is unfolded in a third direction intersecting with the first direction and the second direction, and a housed state in which the first body contact member is housed from the unfolded state.

In this tray for fusion splicing work, the first body contact member is provided, and this first body contact member can be transitioned between the unfolded state and the housed state. Therefore, when the fusion splicing work is performed, the work can be performed in a state in which the tray is stabilized by making the first body contact member be in the unfolded state. On the other hand, when the tray is housed, it is possible to easily house the tray in the housing case by making the first body contact member be in the housed state.

As an embodiment, the tray main body includes a first region in which the placement portion is provided and a second region on a side opposite to the first region in the tray main body in the third direction. The first body contact member is connected to the tray main body with a hinge mechanism in the second region. In this embodiment, the first body contact member is located in the second region on a side opposite to the first region in which the placement portion for the fusion splicer is provided. Therefore, the first body contact member can be housed along the second region without coming into contact with the fusion splicer. As a result, when the first body contact member is housed, it is possible to place the fusion splicer as it is without detaching the fusion splicer from the tray or moving the fusion splicer from the placement portion.

As an embodiment, in the unfolded state, the first body contact member includes a main body portion that extends in the first direction along an edge portion of the one long wall portion of the tray main body to which the first body contact member is attached, and a pair of leg portions that extend in the third direction away from the tray main body with both ends of the main body portion in the first direction as base ends. According to this embodiment, when the first body contact member is made to be in the housed state, another member (for example, the second body contact member which will be described later) can be housed in the space between the pair of leg portions, thereby improving the housing efficiency.

As an embodiment, a length of each of the pair of leg portions may be greater than a length of the tray main body in the third direction. As the length of the leg portion increases, the outer surface of the first body contact member that comes into contact with the body of the operator using the fusion splicer can be enlarged. According to this present embodiment, a wide outer surface of the first body contact member can be secured, and the stability of the tray during work is improved.

As an embodiment, in the unfolded state, a width of the main body portion in the third direction may be one-half or less of a length of each of the pair of leg portions. According to this embodiment, a wide space can be secured between the pair of leg portions, and the housing efficiency can be further improved.

As an embodiment, the tray main body may include a connection portion to which a tripod that supports the tray is able to be connected. In the housed state, the connection portion may exist between the pair of leg portions when viewed in the third direction. According to this embodiment, the tripod can be connected to the connection portion of the tray main body without being hindered by the first body contact member even in a state where the first body contact member is housed.

As an embodiment, the outer surface of the first body contact member may include a curved surface portion protruding in a direction from the outside toward the inside of the tray main body. According to this embodiment, when the fusion splicing work is performed, the outer surface of the first body contact member fits the body of the operator, and the stability of the tray is improved.

As an embodiment, the tray for fusion splicing work may further include a second body contact member detachably attached to the tray main body on a side of the one long wall portion of the pair of long wall portions and on a side opposite to the first body contact member. According to this embodiment, the tray is provided with not only the first body contact member but also the second body contact member, thereby further improving the stability of the tray during the fusion splicing work. Further, since the second body contact member can be detached from the tray main body, the tray can be easily housed in the housing case.

As an embodiment, the tray main body may include a first attachment portion which is provided on one of the pair of long wall portions and to which a belt put around a waist of the operator is able to be attached, and a second attachment portion which is provided on both of the pair of short wall portions and to which a strap put around a neck of the operator is able to be attached. According to this embodiment, by attaching the belt to the tray main body, the tray main body is fixed, and the stability of the tray is improved during the fusion splicing work. Moreover, by putting the strap attached to the tray main body around the neck, the operator can carry out the work while keeping the tray close to the body without continuously holding the tray main body by hand. Therefore, the working efficiency of the fusion splicing work is improved.

As an embodiment, at least one wall portion of the pair of long wall portions and the pair of short wall portions may be provided with a notch depressed inside the tray main body. According to this embodiment, when the tray is housed in the housing case, the devices disposed in the spaces located on both sides of the tray can be cable-connected via the notches.

A fusion splicer set according to an embodiment of the present disclosure includes a housing case including the tray for fusion splicing work according to any one of the embodiments described above, and a fusion splicer placed on the placement portion of the tray. In this fusion splicer set, the tray for fusion splicing work is detachable from the housing case. According to this fusion splicer set, it is possible to obtain the same effect as each embodiment of the tray for fusion splicing work described above.

### [Details of embodiment of the present disclosure]

An embodiment of the present disclosure will be described in detail below with reference to the accompanying drawings. In the following description, the same reference signs will be used for the same elements or elements having the same functions, and redundant description will be omitted.

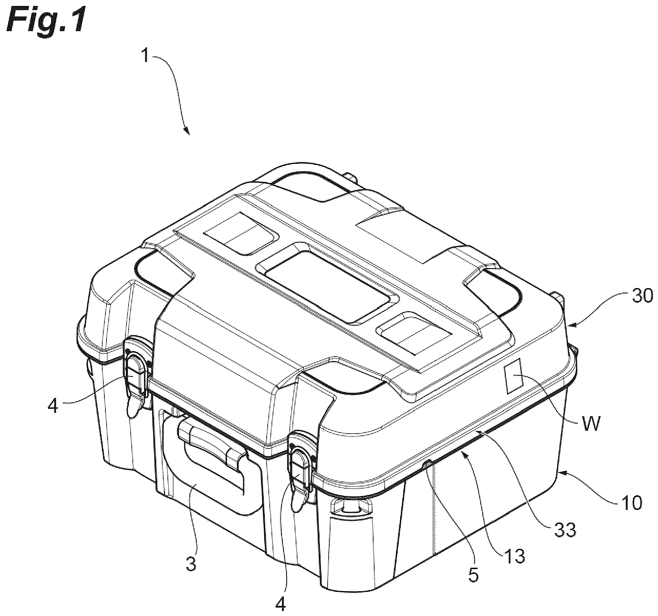

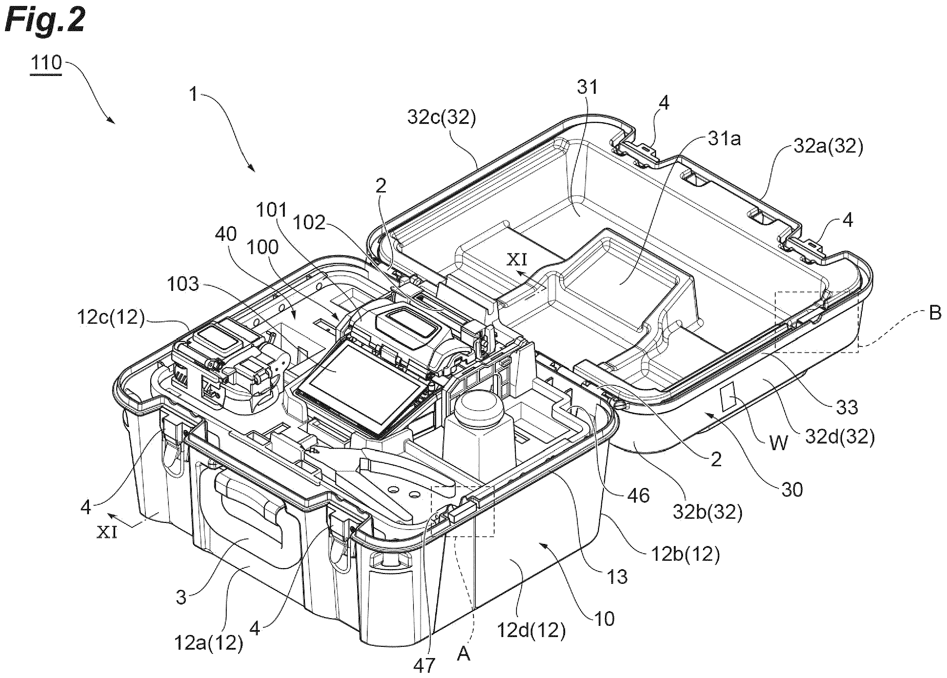

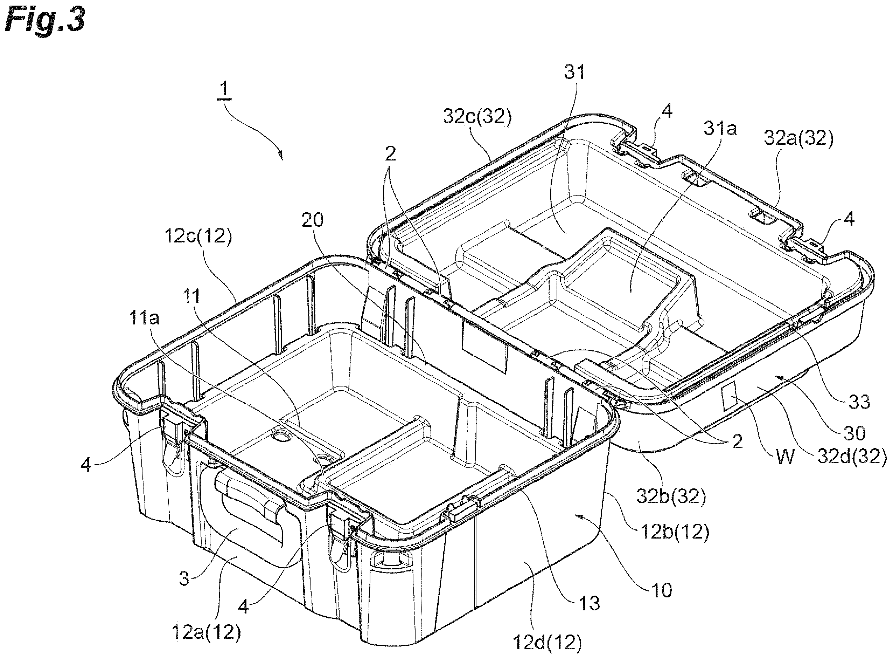

A housing case 1 and a fusion splicer set 110 according to the embodiment will be described with reference to FIGS. 1 to 3. FIG. 1 is a perspective view illustrating the housing case 1 according to the embodiment. FIG. 2 is a perspective view illustrating the fusion splicer set 110 that includes the housing case 1 with a lid body 30 opened with respect to a case main body 10. FIG. 3 is a perspective view illustrating the housing case 1 with various devices such as a fusion splicer 100 housed therein omitted from illustration. Hereinafter, in a state where the lid body 30 is closed with respect to the case main body 10 (a state illustrated in FIG. 1), a direction along a direction from the case main body 10 toward the lid body 30 (a vertical direction in FIG. 1) is referred to as a thickness direction of the housing case 1.

First, the fusion splicer 100 housed in the housing case 1 will be described with reference to FIG. 2. The fusion splicer 100 is a device for fusion splicing optical fibers. A cover 101 and a heater 102 are provided in the upper portion of the fusion splicer 100. The cover 101 is attached to openably and closably cover a fusion portion (not illustrated) for fusion splicing the optical fibers and prevents wind from entering the fusion portion. The heater 102 is used to heat and shrink a fiber reinforcing sleeve that is put on a fusion splicing portion between the optical fibers fused by the fusion portion. Further, the fusion splicer 100 includes a monitor 103 that displays a fusion splicing status between the optical fibers which are imaged by a camera (not illustrated) disposed inside. In the fusion splicer set 110, the fusion splicer 100, other fusion splicing tools, equipment, and the like are housed in the housing case 1.

The housing case 1 is a case for housing the fusion splicer 100 for an optical fiber. The housing case 1 includes the case main body 10, the lid body 30, and a tray 40. As illustrated in FIG. 2, the lid body 30 is attached to the case main body 10 with hinges 2 to be openable and closable. Since the housing case 1 has the hinges 2, it is possible to transition the lid body 30 from a closed state of the lid body 30 illustrated in FIG. 1 to an opened state of the lid body 30 illustrated in FIG. 2. It is also possible to transition the lid body 30 from the opened state to the closed state. In the present embodiment, the lid body 30 is configured to open approximately 180 degrees with respect to the case main body 10, but the angle at which the lid body 30 can be opened is not limited. For example, the lid body 30 may be configured to open 90 degrees with respect to the case main body 10. Further, the lid body 30 may be separable from the housing case 1.

The housing case 1 has a ring-shaped handle 3. The handle 3 is attached to a side of the case main body 10 opposite to a side on which the hinges 2 are located. An operator can easily carry the housing case 1 by gripping the handle 3. The handle 3 may be provided in the lid body 30. The housing case 1 has a pair of locking members 4. Each locking member 4 is constituted by a pair of metal fittings provided in the case main body 10 and the lid body 30. The lid body 30 is maintained in a closed state by engaging the pair of metal fittings with each other, and unintended opening and closing of the lid body 30 is prevented.

As illustrated in FIG. 1, the housing case 1 includes an insertion portion 5 configured for a cable extending from the inside of the housing case 1 to the outside thereof to be inserted through the insertion portion 5 in a state where the lid body 30 is closed with respect to the case main body 10. The cable may be, for example, a power supply cable used to supply power to the fusion splicer 100. When the cable is a power supply cable, one end of the cable is connected to the fusion splicer 100 and the other end is connected to an external power source. A detailed configuration of the insertion portion 5 will be described later. In the following description, a side on which the handle 3 is located is referred to as a front side of the housing case 1, and a side on which the hinges 2 are located is referred to as a rear side. In addition, in the thickness direction of the housing case 1, a side on which the lid body 30 is located is referred to as an upper side of the housing case 1, and a side on which the case main body 10 is located is referred to as a lower side.

As illustrated in FIG. 3, the case main body 10 is a bottomed box-shaped member with an open top. The case main body 10 has a bottom plate 11 and a first peripheral wall 12 (a first side wall). The bottom plate 11 is a substantially rectangular plate-like member in a plan view and is located at the bottom portion of the case main body 10. The inner side surface of the bottom plate 11 is provided with an uneven portion 11a that can be used for arranging the devices housed in the case main body 10. The inner side surface of the bottom plate 11 may be a flat surface without the uneven portion 11a, or may be provided with a partition plate having a higher height than the uneven portion 11a.

The first peripheral wall 12 is a wall-shaped member rising from the edge portion of the bottom plate 11. The first peripheral wall 12 includes a front side peripheral wall 12a provided with the handle 3, a rear side peripheral wall 12b located on a side opposite to the front side peripheral wall 12a and provided with the hinges 2, and a left side peripheral wall 12c and a right side peripheral wall 12d which connect the front side peripheral wall 12a and the rear side peripheral wall 12b to each other. The left side peripheral wall 12c is a wall-shaped member located on the left side of the case main body 10 when the case main body 10 is viewed from the front side peripheral wall 12a, and the right side peripheral wall 12d is a wall-shaped member located on the right side of the case main body 10 when the case main body 10 is viewed from the front side peripheral wall 12a. The widths of the front side peripheral wall 12a and the rear side peripheral wall 12b are slightly larger than the widths of the left side peripheral wall 12c and the right side peripheral wall 12d. Therefore, the overall shape of the case main body 10 is such that the width in a left-right direction is larger than the width in a front-rear direction. The shape of the case main body 10 is not limited and may be a shape having equal widths in the front-rear direction and in the left-right direction.

The bottom plate 11 and the first peripheral wall 12 may be formed of a resin such as polypropylene or polyethylene. The bottom plate 11 and the lower portion of the first peripheral wall 12 are constituted by stacking members formed of the same material or different materials and are thicker than the upper portion of the first peripheral wall 12. As a result, the fusion splicer 100 can be more reliably protected from impact applied to the lower portion of the housing case 1 when the housing case 1 is dropped. Moreover, due to the difference in thickness, a step surface 20 is provided at the boundary portion between the upper portion and the lower portion of the first peripheral wall 12. The step surface 20 is continuously provided along the inner circumference of the first peripheral wall 12. The edge portion of a tray 40 (see FIG. 2) is placed on the step surface 20.

The lid body 30 is a member that closes an opening of the case main body 10 and has a top plate 31 and a second peripheral wall 32 (a second side wall). The top plate 31 is a substantially rectangular plate-like member in a plan view and is located at the upper portion of the lid body 30. As illustrated in FIG. 2, the inner side surface of the top plate 31 is provided with an uneven portion 31a that matches the shape of the fusion splicer 100. The uneven portion 31a covers the upper portion of the fusion splicer 100 in a state where the lid body 30 is closed. This prevents the fusion splicer 100 from being displaced during transportation of the housing case 1. The top plate 31 may have a flat surface without the uneven portion 31a.

The second peripheral wall 32 is a wall-shaped member rising from the edge portion of the top plate 31. The second peripheral wall 32 has a front side peripheral wall 32a, a rear side peripheral wall 32b, a left side peripheral wall 32c, and a right side peripheral wall 32d. In a state where the lid body 30 is closed, the front side peripheral wall 32a is a wall-shaped member located on the front side of the housing case 1, and the rear side peripheral wall 32b is a wall-shaped member located on the rear side of the housing case 1. Further, the left side peripheral wall 32c is a wall-shaped member located on the left side of the housing case 1, and the right side peripheral wall 32d is a wall-shaped member located on the right side of the housing case 1. The widths of the front side peripheral wall 32a, the rear side peripheral wall 32b, the left side peripheral wall 32c, and the right side peripheral wall 32d are designed to be approximately the same as the widths of the front side peripheral wall 12a, the rear side peripheral wall 12b, the left side peripheral wall 12c, and the right side peripheral wall 12d of the case main body 10, respectively.

The top plate 31 and the second peripheral wall 32 may be formed of a resin such as polypropylene or polyethylene. The top plate 31 and the second peripheral wall 32 are constituted by stacking members formed of the same material or different materials and are thicker than the upper portion of the first peripheral wall 12 of the case main body 10. As a result, the fusion splicer 100 housed inside the housing case 1 can be more reliably protected from external impact.

The top plate 31 or the second peripheral wall 32 has a window portion W made of a transparent member that transmits visible light. The window portion W may be formed by fitting a transparent resin member into an opening portion formed in the top plate 31 or the second peripheral wall 32, for example. The window portion W may be provided at a position at which a charging status of the fusion splicer 100 is able to be visually recognized. For example, in a case where a lamp indicating the charging status is provided in the right side surface of the fusion splicer 100, the window portion W may be provided in a portion of the top plate 31 near the right side peripheral wall 32d or in the right side peripheral wall 32d. In the present embodiment, the window portion W is provided in the right side peripheral wall 32d of the second peripheral wall 32. The window portion W may be provided in the first peripheral wall 12 of the case main body 10 instead of the lid body 30.

As illustrated in FIG. 2, the first peripheral wall 12 of the case main body 10 has a first edge portion 13, and the second peripheral wall 32 of the lid body 30 has a second edge portion 33. The first edge portion 13 and the second edge portion 33 come into contact with each other when the lid body 30 is closed with respect to the case main body 10. The first edge portion 13 has an annular shape that continuously extends along the upper end portion of the first peripheral wall 12. The second edge portion 33 has an annular shape that extends continuously along the lower end portion of the second peripheral wall 32, similarly to the first edge portion 13. A portion of each of the first edge portion 13 and the second edge portion 33 to which the locking member 4 is attached is recessed inside the case main body 10. When the lid body 30 is closed, as illustrated in FIG. 1, the first edge portion 13 comes into contact with the second edge portion 33 over substantially the entire circumference of the annular shape. As a result, it is possible to prevent water droplets, dust, or the like from entering the housing case 1 through a gap between the case main body 10 and the lid body 30.

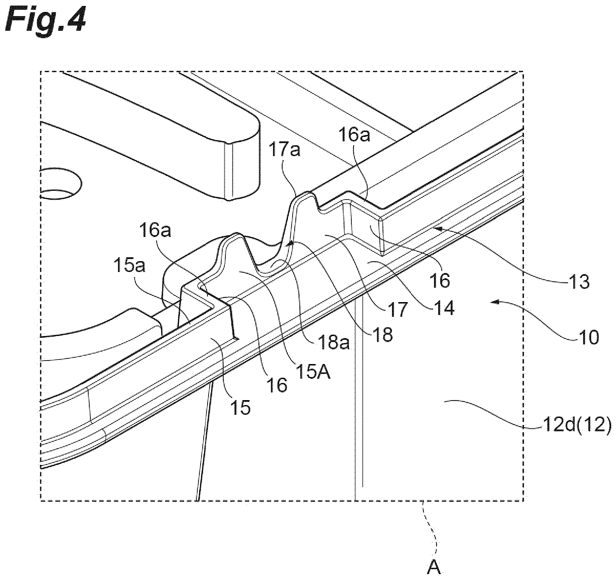

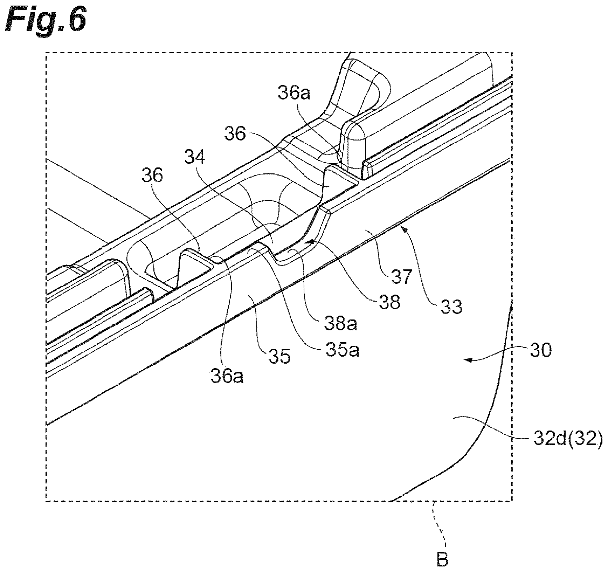

As described above, the housing case 1 includes the insertion portion 5 (see FIG. 1) through which the cable extending from the inside of the case main body 10 to the outside thereof can be inserted in a state where the lid body 30 is closed. The insertion portion 5 is constituted by notches 18 and 38 (see FIGS. 4 and 6) provided in the first edge portion 13 and the second edge portion 33, respectively. Each of the notches 18 and 38 constitutes a case notch. The notch 18 constitutes a first case notch, and the notch 38 constitutes a second case notch. The notch 18 is provided in the first edge portion 13 of the right side peripheral wall 12d, and the notch 38 is provided in the second edge portion 33 of the right side peripheral wall 32d. At least a part of the notch 18 overlaps the notch 38 in the thickness direction of the first peripheral wall 12 and the second peripheral wall 32 when the lid body 30 is closed. In the notches 18 and 38, the first edge portion 13 does not come into contact with the second edge portion 33, and an opening portion is formed.

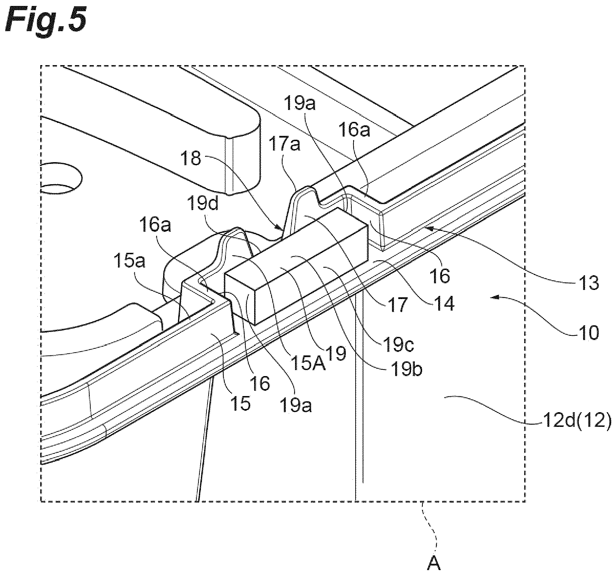

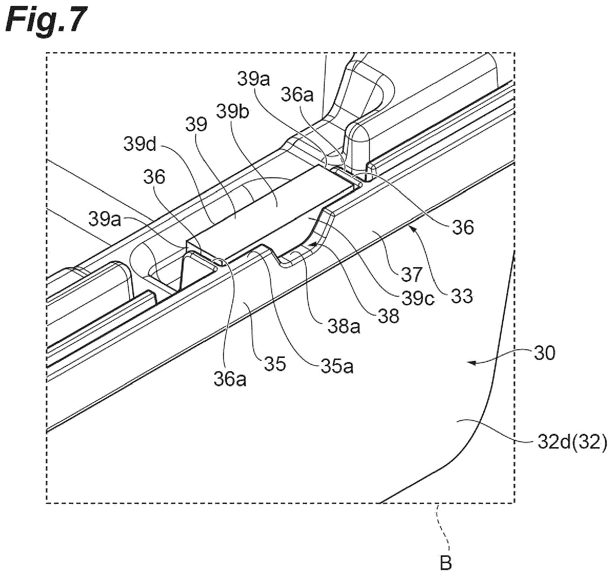

A detailed configuration of the notches 18 and 38 will be described with reference to FIGS. 4 to 7. FIGS. 4 and 5 are enlarged views of a region A which is a part of the case main body 10 (a portion of the first edge portion 13 in which the notch 18 is provided) surrounded by a dashed line illustrated in FIG. 2. For convenience of explanation, illustration of a sealing member 19 is omitted in FIG. 4, and the sealing member 19 is illustrated in FIG. 5. FIGS. 6 and 7 are enlarged views of a region B which is a part of the lid body 30 (a portion of the second edge portion 33 in which the notch 38 is provided) surrounded by a dashed line illustrated in FIG. 2. For convenience of explanation, illustration of a sealing member 39 is omitted in FIG. 6, and the sealing member 39 is illustrated in FIG. 7.

The first edge portion 13 has an end surface 14 (a first end surface) and a first thin wall 15, as illustrated in FIG. 4. The end surface 14 is a flat surface provided along the first edge portion 13. The first thin wall 15 is a wall-shaped member standing on the end surface 14, and the majority thereof is provided along the first edge portion 13. The first thin wall 15 partially has a depression portion 15A that is recessed inside the case main body 10. The depression portion 15A includes a pair of lateral wall portions 16 (first lateral wall portions) and an inner wall portion 17. Each lateral wall portion 16 extends toward the inside of the case main body 10 along a direction intersecting with (orthogonal to; in the present embodiment) an extending direction of the first edge portion 13. The pair of lateral wall portions 16 are provided facing each other. Each lateral wall portion 16 has an upper surface 16a at its upper end. The height (the distance from the end surface 14 to the upper surface 16a) of each lateral wall portion 16 is equal to the height (the distance from the end surface 14 to an upper surface 15a) of a portion of the first thin wall 15 in which the depression portion 15A is not provided (hereinafter referred to as a non-depressed portion).

The inner wall portion 17 is located closer to the inside of the case main body 10 than the non-depressed portion of the first thin wall 15. The inner wall portion 17 is provided along a facing direction of the pair of lateral wall portions 16, that is, along the extending direction of the first edge portion 13, and both end portions thereof are connected to the end portions of the lateral wall portions 16. The inner wall portion 17 has an upper surface 17a at its upper end. The notch 18 is provided in the central portion of the inner wall portion 17. The notch 18 is a portion through which the cable extending from the inside of the case main body 10 to the outside thereof is inserted. The notch 18 is formed in a U shape and has a gently curved bottom surface 18a. Further, a connecting portion between the end portion of the notch 18 and the upper surface 17a is smoothly connected as if a corner is removed. As a result, when the cable is disposed in the notch 18, even in a case where the cable comes into contact with the connecting portion, the coating of the cable is less likely to be damaged. The width of the notch 18 in the extending direction of the inner wall portion 17 gradually decreases from the upper surface 17a toward the end surface 14. The shape of the notch 18 is not limited to the shape described above and may be formed in a V shape with a sharp bottom portion, for example.

The height of a portion of the inner wall portion 17 close to the notch 18 (the distance from the end surface 14 to the upper surface 17a) is larger than that of each of both end portions of the inner wall portion 17 connected to the lateral wall portion 16. As a result, it is possible to prevent the cable inserted through the notch 18 from slipping out of the notch 18. In addition, the inner wall portion 17 is configured such that the thickness thereof decreases from the end surface 14 toward the upper surface 17a.

The sealing member 19 (a first sealing member) is disposed on the end surface 14 as illustrated in FIG. 5. The sealing member 19 seals a gap between the notches 18 and 38 and the cable inserted through the notches 18 and 38 in cooperation with the sealing member 39 (see FIG. 7) of the lid body 30. The sealing member 19 is formed of a resilient material. The material of the sealing member 19 may be silicone rubber, a thermo plastic elastomer (TPE), or a microcell polymer sheet, for example. The hardness of the sealing member 19 is preferably 20 or more and 40 or less, and more preferably 30, for example. The hardness of the sealing member 19 is a value measured on the basis of JIS K 6253.

The sealing member 19 is formed in a rectangular parallelepiped shape and disposed such that its longitudinal direction is along the extending direction of the first edge portion 13. The sealing member 19 has a pair of end surfaces 19a opposing each other in the longitudinal direction. In the present embodiment, each end surface 19a is located slightly apart from a wall surface of the lateral wall portion 16, and these gaps facilitate deformation of the sealing member 19 when the cable is sandwiched. Each end surface 19a may be in contact with the wall surface of the lateral wall portion 16 as long as it does not interfere with the holding of the cable by the sealing member 19. The sealing member 19 has four side surfaces connecting the pair of end surfaces 19a to each other. Of the four side surfaces, a surface (not illustrated) in contact with the end surface 14 is referred to as a lower side surface, and a surface opposing the lower side surface is referred to as an upper side surface 19b. Further, side surfaces connecting the lower side surface and the upper side surface 19b to each other are referred to as an outer side surface 19c and an inner side surface 19d. The outer side surface 19c and the inner side surface 19d are opposed to each other. The outer side surface 19c is located closer to the outside of the case main body 10 than the inner side surface 19d.

The lower side surface adheres to the end surface 14 by an adhesive. As a result, the sealing member 19 is fixed to the first edge portion 13. A fixing method of the sealing member 19 is not limited. For example, in a case where the end surface 14 has a protrusion, the sealing member 19 may be fixed by inserting the protrusion into the lower side surface. The upper side surface 19b is located further apart from the end surface 14 than the upper surface 16a. That is, the thickness of the sealing member 19 (the width from the lower side surface to the upper side surface 19b) is greater than the height of the lateral wall portion 16. Further, the upper side surface 19b is located further apart from the end surface 14 than the bottom surface 18a (see FIG. 4) of the notch 18. That is, at least a part of the sealing member 19 overlaps the notch 18 when the sealing member 19 is viewed from the outer side surface 19c. As a result, when the cable is inserted through the notch 18, the cable is disposed to sink slightly into the interior of the sealing member 19.

The outer side surface 19c is located closer to the outside of the case main body 10 than the wall surface of the non-depressed portion of the first thin wall 15. However, the outer side surface 19c may be located closer to the inside of the case main body 10 than the wall surface of the non-depressed portion of the first thin wall 15, that is, may be located at the depression portion 15A of the first thin wall 15. The inner side surface 19d is located slightly apart from the wall surface of the inner wall portion 17. However, the inner side surface 19d may be located to be in contact with the wall surface of the inner wall portion 17. The shape of the sealing member 19 is not limited to the shape described above. The sealing member 19 may have, for example, a cuboid shape. Further, the upper side surface 19b of the sealing member 19 may be provided with a groove portion extending along a direction connecting the outer side surface 19c and the inner side surface 19d to each other, and the cable may be disposed in the groove portion.

The second edge portion 33 has an end surface 34 (a second end surface) and a second thin wall 35, as illustrated in FIG. 6. The end surface 34 is a flat surface provided along the second edge portion 33. The second thin wall 35 is a wall-shaped member standing on the end surface 34, and the majority thereof is provided along the second edge portion 33. The second thin wall 35 has a pair of lateral wall portions 36 (second lateral wall portions) and an outer wall portion 37. Each lateral wall portion 36 extends toward the inside of the lid body 30 along a direction intersecting with (orthogonal to; in the present embodiment) an extending direction of the second edge portion 33. The pair of lateral wall portions 36 are provided facing each other. Each lateral wall portion 36 has an upper surface 36a at its upper end. The height of each lateral wall portion 36 (the distance from the end surface 34 to the upper surface 36a) is equal to the height of a portion of the second thin wall 35 extending along the second edge portion 33 (the distance from the end surface 34 to an upper surface 35a). The outer wall portion 37 is provided along the second edge portion 33.

The notch 38 is provided in a portion of the outer wall portion 37 corresponding to a region where the pair of lateral wall portions 36 face each other (a portion of the outer wall portion 37 located between the pair of lateral wall portions 36). The notch 38 is a portion through which the cable extending from the inside of the case main body 10 to the outside thereof is inserted. The notch 38 is formed in a U shape and has a gently curved bottom surface 38a. Further, a connecting portion between the end portion of the notch 38 and the upper surface 35a is smoothly connected as if a corner is removed. As a result, when the cable is disposed in the notch 38, even in a case where the cable comes into contact with the connecting portion, the coating of the cable is less likely to be damaged. The width of the notch 38 in the extending direction of the second edge portion 33 gradually decreases from the upper surface 35a toward the end surface 34. The shape of the notch 38 is not limited to the shape described above and may be formed in a V shape with a sharp bottom portion, for example.

The sealing member 39 (a second sealing member) is disposed on the end surface 34 as illustrated in FIG. 7. The sealing member 39 seals a gap between the notches 18 and 38 and the cable inserted through the notches 18 and 38 in cooperation with the sealing member 19 (see FIG. 5) of the case main body 10 when the lid body 30 is closed with respect to the case main body 10. The sealing member 39 is formed of a resilient material, similar to the sealing member 19 described above. The material of the sealing member 39 may be silicone rubber, a thermo plastic elastomer (TPE), or a microcell polymer sheet, for example. The hardness of the sealing member 39 is preferably 20 or more and 40 or less, and more preferably 30, for example. The hardness measurement of the sealing member 39 is performed on the basis of the same standard as the hardness measurement of the sealing member 19 described above.

The sealing member 39 is formed in a rectangular parallelepiped shape and disposed such that its longitudinal direction is along the extending direction of the second edge portion 33. The sealing member 39 has a pair of end surfaces 39a opposing each other in the longitudinal direction. In the present embodiment, each end surface 39a is slightly apart from the wall surface of the lateral wall portion 36, but may be in contact with the wall surface of the lateral wall portion 36. The sealing member 39 has four side surfaces connecting the pair of end surfaces 39a to each other. Of the four side surfaces, a surface (not illustrated) in contact with the end surface 34 (see FIG. 6) is referred to as a lower side surface, and a surface opposing the lower side surface is referred to as an upper side surface 39b. Further, side surfaces connecting the lower side surface and the upper side surface 39b to each other are referred to as an outer side surface 39c and an inner side surface 39d. The outer side surface 39c and the inner side surface 39d are opposed to each other. The outer side surface 39c is located closer to the outside of the lid body 30 than the inner side surface 39d.

The lower side surface of the sealing member 39 adheres to the end surface 34 by an adhesive. As a result, the sealing member 39 is fixed to the second edge portion 33. A fixing method of the sealing member 39 is not limited. For example, in a case where the end surface 34 has a protrusion, the sealing member 39 may be fixed by inserting the protrusion into the lower side surface. The upper side surface 39b is located further apart from the end surface 34 than the upper surface 36a. That is, the thickness of the sealing member 39 (the width from the lower side surface to the upper side surface 39b) is greater than the height of the lateral wall portion 36. Further, the upper side surface 39b is located further apart from the end surface 34 than the bottom surface 38a of the notch 38. That is, at least a part of the sealing member 39 overlaps the notch 38 when the sealing member 39 is viewed from the inner side surface 39d. When the cable is inserted through the notch 38, the cable is disposed to sink slightly into the interior of the sealing member 39.

The outer side surface 39c is located slightly apart from the wall surface of the second thin wall 35 facing it. However, the outer side surface 39c may be located to be in contact with the wall surface. The inner side surface 39d is located closer to the inside of the lid body 30 than the end portion of each lateral wall portion 36. However, the inner side surface 39d may be located closer to the outside of the lid body 30 than the end portion of each lateral wall portion 36, that is, may be located within a region sandwiched between the pair of lateral wall portions 36. The shape of the sealing member 39 is not limited to the shape described above. The sealing member 39 may have, for example, a cuboid shape. Further, the upper side surface 39b of the sealing member 39 may be provided with a groove portion extending along a direction connecting the outer side surface 39c and the inner side surface 39d to each other, and the cable may be disposed in the groove portion.

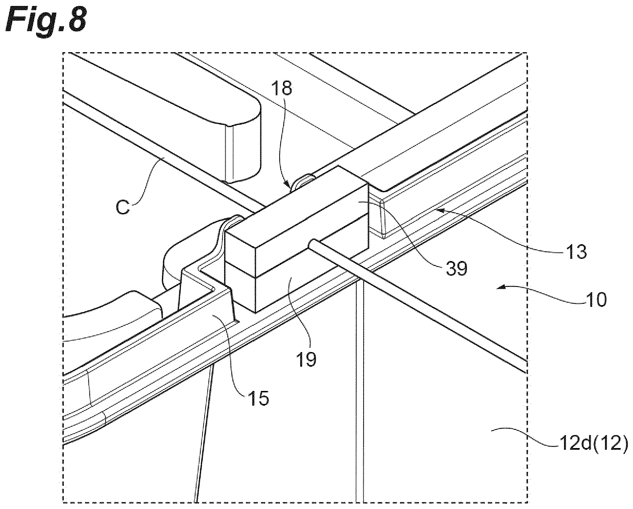

FIG. 8 is a diagram illustrating a state in which the cable C is sandwiched between the sealing member 19 and the sealing member 39. In FIG. 8, illustration of components of the lid body 30 other than the sealing member 39 is omitted for convenience of explanation. The cable C may be a power supply cable used to supply power to the fusion splicer 100. When the lid body 30 is closed with the cable C inserted into the notch 18 of the case main body 10, the sealing member 19 and the sealing member 39 come into contact with each other such that they overlap each other in the thickness direction of the case main body 10, as illustrated in FIG. 8. Specifically, the upper side surface 19b (see FIG. 5) of the sealing member 19 and the upper side surface 39b (see FIG. 7) of the sealing member 39 come into contact with each other. In a state where the lid body 30 is closed, the second thin wall 35 (see FIG. 7) of the lid body 30 is located closer to the outside of the housing case 1 than the first thin wall 15 of the case main body 10 and the sealing members 19 and 39. That is, the notch 18, the sealing members 19 and 39, and the notch 38 are located to be arranged in that order from the inside toward the outside of the housing case 1. The outer side wall surface of the second thin wall 35 is the outermost peripheral surface of the first peripheral wall 12 and the second peripheral wall 32.

The cable C is sandwiched between the sealing member 19 and the sealing member 39. The sealing member 19 and the sealing member 39 are formed of a resilient material as described above. Therefore, the sealing member 19 and the sealing member 39 are deformed according to the shape of the cable C and come into close contact with the coating of the cable C. The cable C extends from the inside of the housing case 1 to the outside of the housing case 1 through the notch 18, the portion between the sealing member 19 and the sealing member 39, and the notch 38. The cable C may be a power supply cable used to supply power to the fusion splicer 100 as described above, or may be a power supply cable used to supply power to an information terminal (such as a smart phone, for example) for managing fusion work in the fusion splicer 100. Two or more cables C may be sandwiched between the sealing member 19 and the sealing member 39.

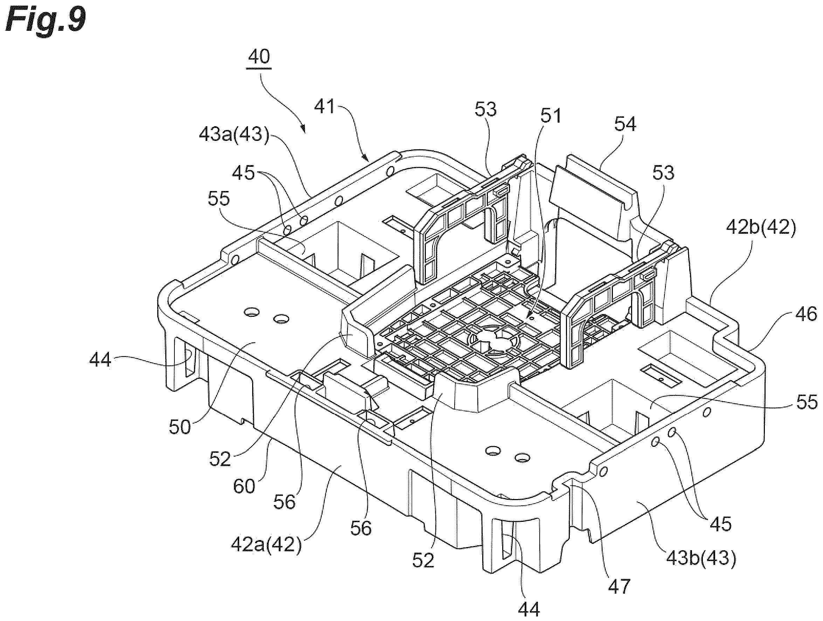

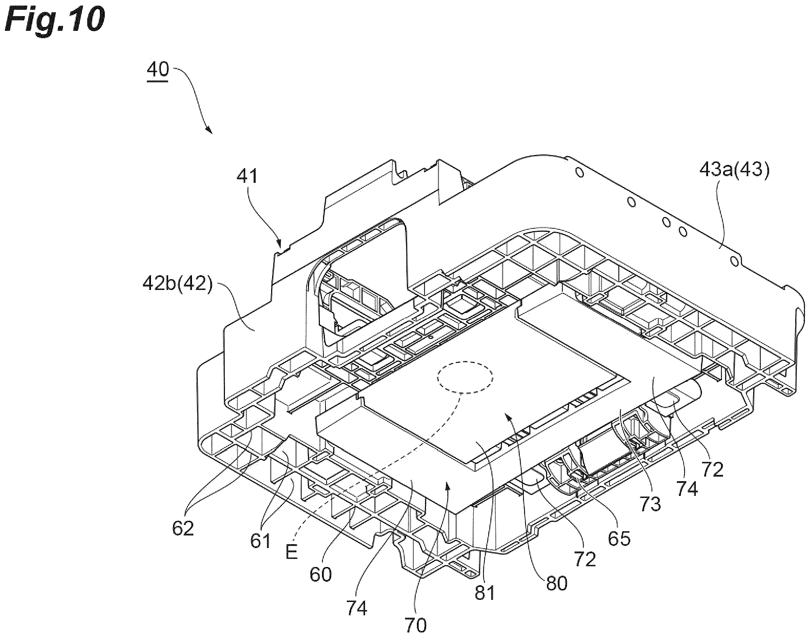

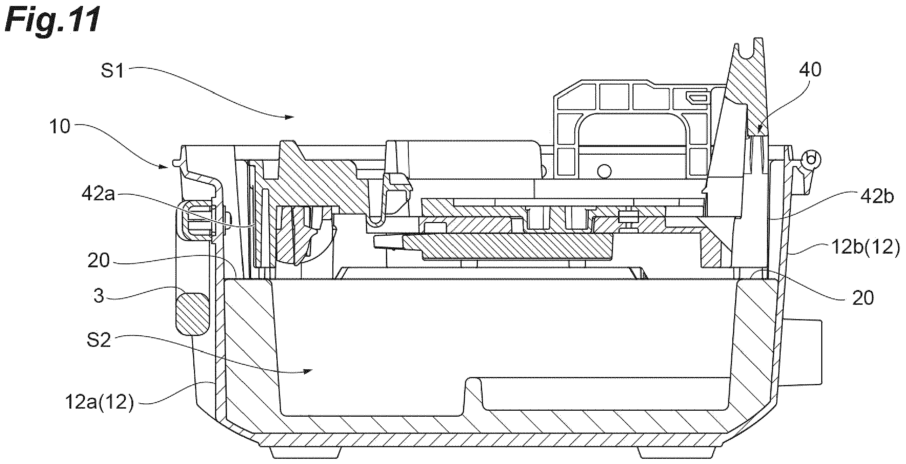

A configuration of the tray 40 will be described with reference to FIGS. 9 to 11. FIG. 9 is a perspective view of the tray 40 from a side of a first region 50. FIG. 10 is a perspective view of the tray 40 from a side of a second region 60. FIG. 11 is a cross-sectional view of the housing case 1 along line XI-XI illustrated in FIG. 2. In FIG. 11, for convenience of explanation, illustration of various devices housed in the case main body 10 and the lid body 30, except for the tray 40, is omitted. In the following description, when the tray 40 is housed in the case main body 10 (see FIG. 2), a side facing the front side peripheral wall 12a of the case main body 10 is referred to as a front side of the tray 40, and a side facing the rear side peripheral wall 12b thereof is referred to as a rear side of the tray 40, a side facing the left side peripheral wall 12c thereof is referred to as a left side of the tray 40, and a side facing the right side peripheral wall 12d thereof is referred to as a right side of the tray 40. The tray 40 includes a tray main body 41, a first body contact member 70, and a second body contact member 80.

The tray main body 41 is a work table that houses the fusion splicer 100 and the like in order in the housing case 1 and is used for the fusion splicing work for the optical fibers. The operator positions the tray main body 41 in front of his/her body (for example, abdomen) and performs the fusion splicing work on the tray main body 41. A pair of long wall portions 42 and a pair of short wall portions 43 are provided in the outer peripheral edge portion of the tray main body 41. The pair of long wall portions 42 are wall-shaped members opposing each other and extending along a left-right direction (a first direction) of the tray 40. The pair of short wall portions 43 are wall-shaped members opposing each other and extending along a front-rear direction (a second direction) of the tray 40. The upper side end portions of the pair of long wall portions 42 and the pair of short wall portions 43 slightly protrude upward from the edge portion of the first region 50, which will be described later. This prevents tools and the like placed in the first region 50 and used for the fusion splicing work from falling out of the tray main body 41. Of the pair of long wall portions 42, the long wall portion 42 located on the front side of the tray 40 is referred to as a front side long wall portion 42a (one long wall portion), and the long wall portion 42 located on the rear side of the tray 40 is referred to as a rear side long wall portion 42b. Further, of the pair of short wall portions 43, the short wall portion 43 located on the left side of the tray 40 is referred to as a left side short wall portion 43a, and the short wall portion 43 located on the right side of the tray 40 is referred to as a right side short wall portion 43b.

The front side long wall portion 42a is a portion that comes into contact with the body of the operator during the fusion splicing work. The surface of the front side long wall portion 42a has a gently curved surface shape that is slightly protruded from the outer side (the front side) toward the inner side (the rear side) of the tray main body 41. As a result, the front side long wall portion 42a fits the body of the operator, and the stability of the tray 40 is improved. The front side long wall portion 42a has a pair of first attachment portions 44 to which a belt put around the waist of the operator is attached. Each first attachment portion 44 is provided at each of the left and right end portions of the front side long wall portion 42a. Each first attachment portion 44 is formed in an annular shape, and a belt can be inserted therein. The operator can pass the belt put around his/her waist through each first attachment portion 44 and perform the fusion splicing work in a state where the tray 40 is fixed.

The left side short wall portion 43a and the right side short wall portion 43b each have a second attachment portion 45 to which a strap put around the neck of the operator is attached. The second attachment portion 45 is provided at substantially the center portion of each of the left side short wall portion 43a and the right side short wall portion 43b in the front-rear direction of the tray 40. Each second attachment portion 45 is constituted by two holes penetrating the tray 40 in the left-right direction. When performing the fusion splicing work, the operator first attaches the strap to the tray main body 41 by passing hooks (for example, carabiners) provided at both ends of the strap through two holes. After that, the operator can carry out the fusion splicing work by putting the strap around the neck without continuously holding the tray main body 41.

Notches 46 and 47 depressed inside the tray main body 41 are provided in the right side portion of the rear side long wall portion 42b and the front side portion of the right side short wall portion 43b. Each of the notches 46 and 47 constitutes a tray notch. These notches 46 and 47 serve to connect the space above the tray 40 and the space below the tray 40 to each other when the tray 40 is housed in the case main body 10. Here, an aspect in which the tray 40 is housed will be described with reference to FIG. 11.

As illustrated in FIG. 11, the tray 40 is housed inside the case main body 10 through the opening thereof. The lower side end portions of the front side long wall portion 42a and the rear side long wall portion 42b of the tray main body 41 abut on the step surface 20 of the case main body 10. The internal space of the housing case 1 is partitioned into an upper side housing space S1 and a lower side housing space S2 by the tray 40. The upper side housing space S1 is a space surrounded by the lid body 30 (not illustrated) and the tray 40. The upper side housing space S1 may house the fusion splicer 100, the working tools such as a remover, containers for housing chemicals, and the like. The lower side housing space S2 is a space surrounded by the case main body 10 and the tray 40. An AC adapter, a battery, or the like used to supply power to the fusion splicer 100 may be housed in the lower side housing space S2.

The notches 46 and 47 serve to connect the upper side housing space S1 and the lower side housing space S2 described above to each other. For example, when the power is supplied to the fusion splicer 100 using the power supply cable having an AC adapter in the middle thereof, the AC adapter is housed in the lower side housing space S2. In this case, a portion of the power supply cable which extends from the AC adapter to the fusion splicer 100 is pulled out from the lower side housing space S2 to the upper side housing space S1 through the notch 46. On the other hand, a portion of the power supply cable which extends from the AC adapter to the external power supply is pulled out from the lower side housing space S2 to the upper side housing space S1 through the notch 47. The portion of the power supply cable which is pulled out through the notch 47 to the upper side housing space S1 may be pulled out to the outside of the housing case 1 through the insertion portion 5 (the notches 18 and 38) of the housing case 1.

The tray main body 41 has the first region 50 and the second region 60 defined (surrounded) by the pair of long wall portions 42 and the pair of short wall portions 43, as illustrated in FIGS. 9 and 10. The first region 50 is a region located on one side (the upper side) of the tray main body 41 in the vertical direction (a third direction) of the tray 40. The second region 60 is a region located on a side opposite to the first region 50 (the other side (the lower side) of the tray main body 41) in the tray main body 41 in the vertical direction of the tray 40.

The first region 50 is a substantially rectangular region in a plan view, as illustrated in FIG. 9. Various devices such as the fusion splicer 100 used for the fusion splicing work are placed in the first region 50. A placement portion 51 on which the fusion splicer 100 is placed is provided in the substantially central portion of the first region 50. The placement portion 51 has a shape depressed inside the tray main body 41 and has a bottom surface with a size allowing the fusion splicer 100 to be placed thereon. The bottom surface has a substantially rectangular shape in a plan view.

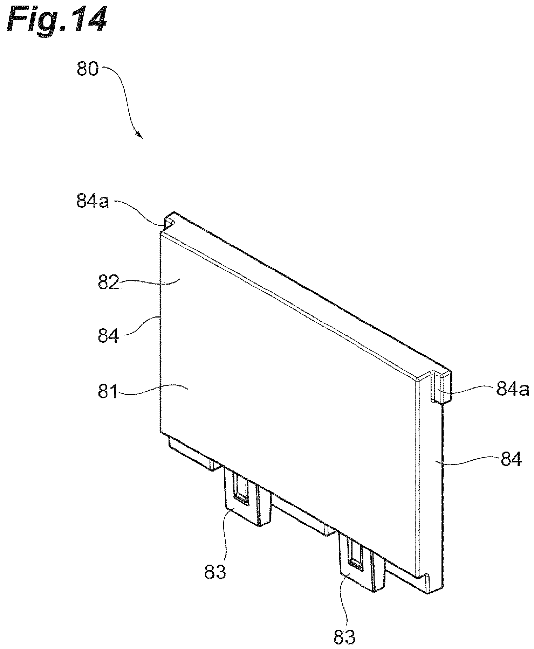

A front restricting portion 52, a pair of side restricting portions 53, and a rear restricting portion 54 are provided around the placement portion 51 to restrict movement of the fusion splicer 100 placed on the placement portion 51. The front restricting portion 52 is a wall-shaped member rising upward from the first region 50 and is provided to surround a front side corner portion of the placement portion 51. Each side restricting portion 53 is an arch-shaped member having two columns aligned in the front-rear direction of the tray 40 and a rod-shaped connecting portion that extends in the front-rear direction and connects the upper side end portions of the two columns to each other. The pair of side restricting portions 53 are provided such that the placement portion 51 is sandwiched therebetween in the left-right direction of the tray 40. The rear restricting portion 54 is a plate member that connects the rear side end portions of the pair of side restricting portions 53. The first region 50 is provided with a plurality of housing recesses 55 depressed inside the tray main body 41. The housing recess 55 houses a container (for example, a hand wrap) for a chemical used for the fusion splicing work. Further, a plurality of insertion recesses 56 depressed inside the tray main body 41 are provided in the vicinity of the front side long wall portion 42a in the first region 50. Insertion portions 83 (see FIG. 14) of the second body contact member 80 described later are inserted into the insertion recesses 56.

As illustrated in FIG. 10, the second region 60 is a substantially rectangular region in a plan view and located a side opposite to the first region 50. The second region 60 is provided with a plurality of recesses 61 depressed inside the tray main body 41. By providing the recesses 61, cavities are generated inside the tray main body 41, and weight reduction of the tray main body 41 is realized. Moreover, a plurality of beam portions 62 extending linearly are provided between the plurality of recesses 61 to curb a decrease in the strength of the tray main body 41. The shape of the second region 60 is not limited to the shape described above and may be a flat surface shape as a whole. The first body contact member 70 and the second body contact member 80 can be housed in the second region 60.

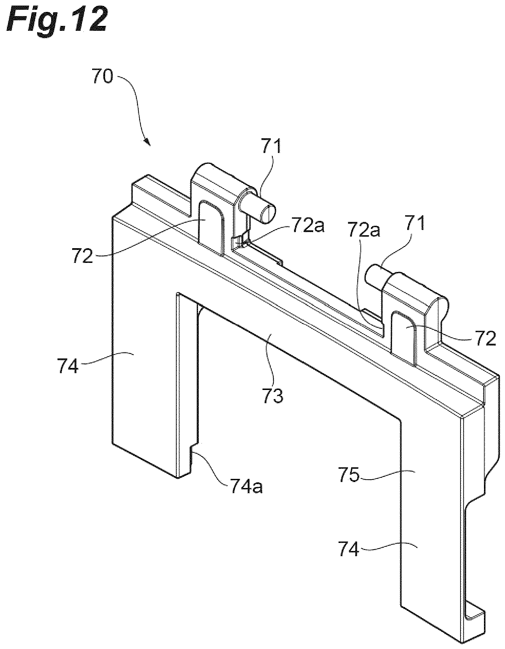

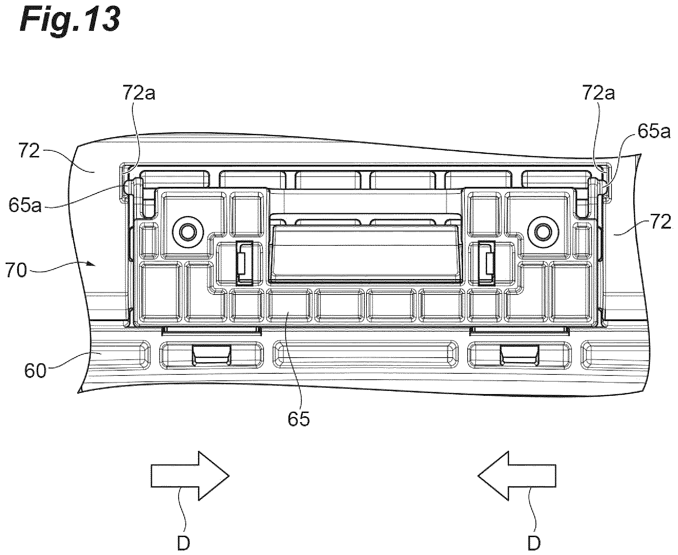

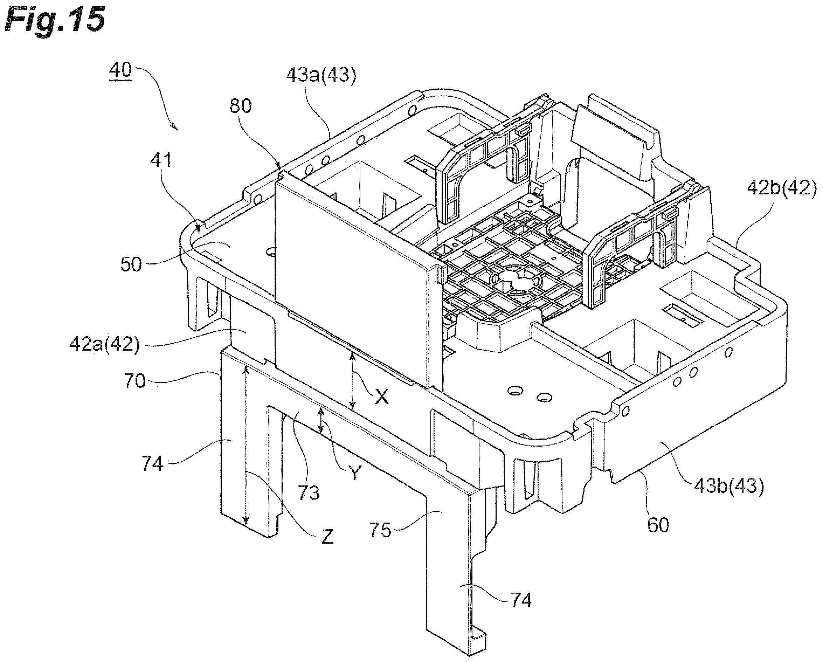

A detailed configuration of the first body contact member 70 and the second body contact member 80 will be described with reference to FIGS. 12 to 15. FIG. 12 is a perspective view illustrating the first body contact member 70. FIG. 13 is an enlarged view of a recess 72a of the first body contact member 70 and a protrusion 65a of a locking member 65 in a state in which the first body contact member 70 is housed. FIG. 14 is a perspective view illustrating the second body contact member 80. FIG. 15 is a perspective view illustrating the tray 40 with the first body contact member 70 and the second body contact member 80 unfolded.

The first body contact member 70 is a member that comes into contact with the body of the operator during the fusion splicing work. The first body contact member 70 has a pair of shaft portions 71, a pair of connecting portions 72, a main body portion 73, and a pair of leg portions 74, as illustrated in FIG. 12. The pair of shaft portions 71 are cylindrical members extending in the same direction. The pair of shaft portions 71 are located apart from each other in the extending direction. Each shaft portion 71 is inserted into a recess (not illustrated) provided in the second region 60 of the tray main body 41. The pair of shaft portions 71 and the recess provided in the tray main body 41 function as a hinge mechanism. As a result, the first body contact member 70 can be transitioned between a housed state in which the first body contact member 70 is disposed along the extending direction of the tray main body 41 (see FIG. 10) and an unfolded state in which the first body contact member 70 stands against the tray main body 41 (see FIG. 15). As illustrated in FIG. 15, the first body contact member 70 is disposed along the extending direction of the front side long wall portion 42a in the unfolded state.

The pair of connecting portions 72 are members that connect the pair of shaft portions 71 and the main body portion 73 to each other, as illustrated in FIG. 12. Each connecting portion 72 has the recess 72a on the inner side surface thereof. The recess 72a is configured such that the protrusion 65a of the locking member 65 is fitted into the recess 72a. Hereinafter, the locking member 65 will be described. The locking member 65 is provided in the second region 60 of the tray main body 41, as illustrated in FIG. 10. The locking member 65 is a member that maintains the housed state of the first body contact member 70. As illustrated in the enlarged view of FIG. 13, the locking member 65 has a pair of protrusions 65a on the outer side thereof. In the housed state of the first body contact member 70, the protrusions 65a of the locking member 65 are fitted into the recesses 72a of the first body contact member 70, and the first body contact member 70 is locked. As a result, the housed state of the first body contact member 70 is maintained. In a case where the first body contact member 70 is transitioned from the housed state to the unfolded state, both end portions of the locking member 65 are pushed inward (in a direction of arrow D illustrated in FIG. 13) to release the locking of the first body contact member 70.

As illustrated in FIG. 12, the main body portion 73 and the pair of leg portions 74 are elongated plate-like members. In the unfolded state of the first body contact member 70, as illustrated in FIG. 15, the main body portion 73 extends in the left-right direction of the tray 40 along the front side long wall portion 42a. Further, the pair of leg portions 74 extend in the vertical direction of the tray 40 in a direction apart from the tray main body 41 with both ends of the main body portion 73 in the left-right direction as base ends. Each leg portion 74 has a recess 74a inside the tip end portion thereof, as illustrated in FIG. 12. As illustrated in FIG. 10, in the housed state of the first body contact member 70, the second body contact member 80 is housed in a space between the pair of leg portions 74. At this time, a protrusion 84a of the second body contact member 80, which will be described later, is fitted into the recess 74a of each leg portion 74, and thus the second body contact member 80 is prevented from falling out from the space between the pair of leg portions 74.

The length Z of each leg portion 74 is greater than the length (the thickness) X in the vertical direction of the tray main body 41, as illustrated in FIG. 15. For example, the length Z of each leg portion 74 may be twice or more the length X of the tray main body 41. The length X of the tray main body 41 may be, for example, 40 mm or more and 80 mm or less. The length Z of each leg portion 74 may be, for example, 80 mm or more and 120 mm or less. Further, the width Y of the main body portion 73 in the vertical direction of the tray main body 41 is smaller than the length Z of each leg portion 74. For example, the width Y of the main body portion 73 may be one-half or less of the length Z of each leg portion 74, or may be one-fourth or less thereof.

As illustrated in FIG. 10, in the housed state of the first body contact member 70, the second body contact member 80 can be housed in the space between the pair of leg portions 74. Further, a connection portion E to which a tripod that supports the tray 40 is connected is provided in the second region 60 of the tray 40. In FIG. 10, the connection portion E is indicated by a dashed line because it overlaps the second body contact member 80. The connection portion E exists between the pair of leg portions 74 when viewed in the third direction. The connection portion E is provided at a position overlapping the space between the pair of leg portions 74 (the space at which the second body contact member 80 is located in FIG. 10) in the vertical direction of the tray main body 41. That is, when the second body contact member 80 is removed, it is possible to connect the tripod to the connection portion.

As illustrated in FIG. 12, the main body portion 73 and the pair of leg portions 74 have an outer surface 75 that comes into contact with the body of the operator performing the fusion splicing work. The outer surface 75 is a surface on an outer side (the front side) in a direction from an inner side (the rear side) of the tray main body 41 toward the outer side (the front side) in the unfolded state of the first body contact member 70 (see FIG. 15) among the surfaces of the main body portion 73 and the pair of leg portions 74. The outer surface 75 has a gently curved surface shape that is slightly protruded toward the inner side (the rear side) of the tray main body 41. The outer surface 75 may not be entirely curved and may have a partially curved surface portion. For example, only the surface of the main body portion 73 may be curved. Further, the outer surface 75 may be flat as a whole without having a curved surface shape.

The second body contact member 80 is a member that comes into contact with the body of the operator during the fusion splicing work. As illustrated in FIG. 14, the second body contact member 80 has a plate portion 81, a pair of insertion portions 83, and a pair of protrusions 84a. The plate portion 81 is a rectangular plate-like member in a plan view. The plate portion 81 has an outer surface 82. The outer surface 82 is a surface on an outer side (the front side) in a direction from the inner side (the rear side) of the tray main body 41 toward the outer side (the front side) in the unfolded state in which the second body contact member 80 stands on the tray main body 41 (see FIG. 15). The outer surface 82 has a gently curved surface shape that is slightly protruded toward the inner side (the rear side) of the tray main body 41. The outer surface 82 may not be entirely curved and may have a partially curved surface portion. Further, the outer surface 82 may be flat as a whole without having a curved surface shape.

The pair of insertion portions 83 are portions protruding from the lower side end portion of the plate portion 81 toward the outside of the plate portion 81. Each insertion portion 83 is inserted into the insertion recess 56 of the first region 50 illustrated in FIG. 9. The insertion portion 83 has a structure that allows the second body contact member 80 to be attachable to and detachable from the tray main body 41. As a result, the second body contact member 80 can be transitioned between a housed state in which the second body contact member 80 is disposed along the extending direction of the tray main body 41 (see FIG. 10) and an unfolded state in which the second body contact member 80 stands on the tray main body 41 (see FIG. 15). As illustrated in FIG. 15, the second body contact member 80 is disposed along the extending direction of the front side long wall portion 42a in the unfolded state.

The pair of protrusions 84a are provided on the upper portions of a pair of lateral side surfaces 84 that are opposed to each other with the outer surface 82 interposed therebetween. As described above, when the second body contact member 80 is housed in the space between the pair of leg portions 74 (see FIG. 10), each protrusion 84a is fitted into the recess 74a provided in each of the pair of leg portions 74, and thus the second body contact member 80 is prevented from falling out from the space between the pair of leg portions 74.

As described above, in the tray 40 for fusion splicing work according to the present embodiment, the first body contact member 70 is provided, and the first body contact member 70 can be transitioned between the unfolded state and the housed state. Therefore, when the fusion splicing work is performed, the work can be performed in a state in which the tray 40 is stabilized by making the first body contact member 70 be in the unfolded state. On the other hand, when the tray 40 is housed, it is possible to easily house the tray 40 in the housing case 1 by making the first body contact member 70 be in the housed state.

In the present embodiment, the tray main body 41 has the first region 50 in which the placement portion 51 is provided and the second region 60 on a side opposite to the first region 50 in the tray main body 41 in the third direction. The first body contact member 70 is connected to the tray main body 41 with the hinge mechanism in the second region 60. In this case, the first body contact member 70 is located in the second region 60 on a side opposite to the first region 50 in which the placement portion 51 for the fusion splicer 100 is provided. Therefore, the first body contact member 70 can be housed along the second region 60 without coming into contact with the fusion splicer 100. As a result, when the first body contact member 70 is housed, it is possible to place the fusion splicer 100 as it is without detaching the fusion splicer 100 from the tray 40 or moving the fusion splicer 100 from the placement portion 51.

In the present embodiment, in the unfolded state, the first body contact member 70 has the main body portion 73 that extends in the first direction along the edge portion of the one long wall portion 42 (the front side long wall portion 42a) of the tray main body 41 to which the first body contact member 70 is attached, and the pair of leg portions 74 that extend in the third direction away from the tray main body 41 with both ends of the main body portion 73 in the first direction as base ends. In this case, when the first body contact member 70 is made to be in the housed state, another member (for example, the second body contact member 80) can be housed in the space between the pair of leg portions 74, thereby improving the housing efficiency.

In the present embodiment, the length Z of each of the pair of leg portions 74 is greater than the length X of the tray main body 41 in the third direction. As the length of the leg portion 74 increases, the outer surface 75 of the first body contact member 70 that comes into contact with the body of the operator using the fusion splicer 100 can be enlarged. Therefore, according to the present embodiment, a wide outer surface 75 of the first body contact member 70 can be secured, and the stability of the tray 40 during work is improved.

In the present embodiment, in the unfolded state, the width Y of the main body portion 73 in the third direction may be one-half or less of the length of each of the pair of leg portions 74. In this case, a wide space can be secured between the pair of leg portions 74, and the housing efficiency can be further improved.

In the present embodiment, the tray main body 41 has the connection portion E to which the tripod that supports the tray 40 is able to be connected. In the housed state, the connection portion E exists between the pair of leg portions 74 when viewed in the third direction. In this case, the tripod can be connected to the connection portion E of the tray main body 41 without being hindered by the first body contact member 70 even in a state where the first body contact member 70 is housed.

In the present embodiment, the outer surface 75 of the first body contact member 70 includes the curved surface portion protruding in a direction from the outside toward the inside of the tray main body 41. In this case, when the fusion splicing work is performed, the outer surface 75 of the first body contact member 70 fits the body of the operator, and the stability of the tray 40 is improved.

In the present embodiment, the second body contact member 80 detachably attached to the tray main body 41 on a side of the one long wall portion of the pair of long wall portions 42 and on a side opposite to the first body contact member 70 is further provided. In this case, the tray 40 is provided with not only the first body contact member 70 but also the second body contact member 80, thereby further improving the stability of the tray 40 during the fusion splicing work. Further, since the second body contact member 80 can be detached from the tray main body 41, the tray 40 can be easily housed in the housing case 1.

In the present embodiment, the tray main body 41 has the first attachment portion 44 which is provided on one of the pair of long wall portions 42 and to which the belt put around the waist of the operator is able to be attached, and the second attachment portion 45 which is provided on both of the pair of short wall portions 43 and to which the strap put around the neck of the operator is able to be attached. In this case, by attaching the belt to the tray main body 41, the tray main body 41 is fixed, and the stability of the tray 40 is improved during the fusion splicing work. Moreover, by putting the strap attached to the tray main body 41 around the neck, the operator can carry out the work while keeping the tray 40 close to the body without continuously holding the tray main body 41 by hand. Therefore, the working efficiency of the fusion splicing work is improved.

In the present embodiment, at least one wall portion of the pair of long wall portions 42 and the pair of short wall portions 43 is provided with the notch 46 or 47 depressed inside the tray main body 41. In this case, when the tray 40 is housed in the housing case 1, the devices disposed in the spaces (the upper side housing space S1 and the lower side housing space S2) located on both sides of the tray 40 can be cable-connected through the notches 46 and 47.

Although the embodiment according to the present disclosure is described in detail above, the present invention is not limited to the above embodiment and can be applied to various embodiments.

The insertion portion 5 through which the cable is inserted may be a through hole provided in the first peripheral wall 12 of the case main body 10 or the second peripheral wall 32 of the lid body 30 instead of the notches 18 and 38. In this case, a through hole may be provided in the bottom plate 11 of the case main body 10 or the top plate 31 of the lid body 30.

The first body contact member 70 may be attachable to and detachable from the tray main body 41 similarly to the second body contact member 80. In this case, the state in which the first body contact member 70 is detached from the tray main body 41 corresponds to the housed state of the first body contact member 70. Further, the first body contact member 70 may have a rectangular plate shape in a plan view similarly to the second body contact member 80.

The second body contact member 80 may be able to be housed such that the second body contact member 80 is connected to the tray main body 41 with a hinge mechanism and is folded to a side of the first region 50 of the tray main body 41 similarly to the first body contact member 70. In this case, the second body contact member 80 may have a U shape (the shape similar to the first body contact member 70) with a hollow central portion not to come into contact with the fusion splicer 100 or the like in the housed state.

The first body contact member 70 and the second body contact member 80 may have handles that can be gripped by the operator to facilitate the transition between the unfolded state and the housed state.

### Reference Signs List

1 Housing case
2 Hinge
3 Handle
4 Locking member
5 Insertion portion
10 Case main body
11 Bottom plate
11a Uneven portion
12 First peripheral wall
12a, 32a Front side peripheral wall
12b, 32b Rear side peripheral wall
12c, 32c Left side peripheral wall
12d, 32d Right side peripheral wall
13 First edge portion
14, 34 End surface
15 First thin wall
15A Depression portion
16, 36 Lateral wall portion
15a, 16a, 17a, 35a, 36a Upper surface
17 Inner wall portion
18, 38 Notch
18a, 38a Bottom surface
19, 39 Sealing member
19a, 39a End surface
19b, 39b Upper side surface
19c, 39c Outer side surface
19d, 39d Inner side surface
20 Step surface
30 Lid body
31 Top plate
31a Uneven portion
32 Second peripheral wall
33 Second edge portion
35 Second thin wall
37 Outer wall portion
40 Tray
42 Long wall portion
42a Front side long wall portion
42b Rear side long wall portion
43 Short wall portion
43a Left side short wall portion
43b Right side short wall portion
44 First attachment portion
45 Second attachment portion
46, 47 Notch
50 First region
51 Placement portion
52 Front restricting portion
53 Side restricting portion
54 Rear restricting portion
55 Housing recess
56 Insertion recess
60 Second region
61 Recess
62 Beam portion
65 Locking member
65a Protrusion
70 First body contact member
71 Shaft portion
72 Connecting portion
72a Recess
73 Main body portion
74 Leg portion
74a Recess
75 Outer surface
80 Second body contact member
81 Plate portion
82 Outer surface
83 Insertion portion
84 Lateral side surface
84a Protrusion
100 Fusion splicer
101 Cover
102 Heater
103 Monitor
A Region
B Region
C Cable
E Connection portion
S1 Upper side housing space
S2 Lower side housing space
W Window portion

## Claims

1. A tray (40) for fusion splicing work which is used for fusion splicing work for an optical fiber, comprising:
a tray main body (41) including a pair of long wall portions (42, 42a, 42b) opposing each other and extending along a first direction, and a pair of short wall portions (43, 43a, 43b) opposing each other and extending along a second direction intersecting with the first direction, the tray main body (41) being provided with a placement portion (51) on which a fusion splicer (100) is able to be placed within a rectangular region defined by the pair of long wall portions (42, 42a, 42b) and the pair of short wall portions (43, 43a, 43b); and
a first body contact member (70) including an outer surface (75) configured to come into contact with a body of an operator using the fusion splicer (100) and attached to the tray main body (41) on a side of one long wall portion (42a) of the pair of long wall portions (42, 42a, 42b),
wherein the first body contact member (70) is able to be transitioned between an unfolded state in which the outer surface (75) is unfolded in a third direction intersecting with the first direction and the second direction, and a housed state in which the first body contact member (70) is housed from the unfolded state,
**characterised in that**
the tray main body (41) includes a first region (50) in which the placement portion (51) is provided and a second region (60) on a side opposite to the first region (50) in the tray main body (41) in the third direction,
the first body contact member (70) is connected to the tray main body (41) with a hinge mechanism in the second region (60), and
in the unfolded state, the first body contact member (70) includes a main body portion (73) that extends in the first direction along an edge portion of the one long wall portion (42a) of the tray main body (41) to which the first body contact member (70) is attached, and a pair of leg portions (74) that extend in the third direction away from the tray main body (41) with both ends of the main body portion (73) in the first direction as base ends.

2. The tray (40) for fusion splicing work according to claim 1,
wherein a length of each of the pair of leg portions (74) is greater than a length of the tray main body (41) in the third direction.

3. The tray (40) for fusion splicing work according to claim 1 or 2,
wherein, in the unfolded state, a width of the main body portion (73) in the third direction is one-half or less of a length of each of the pair of leg portions (74).

4. The tray (40) for fusion splicing work according to any one of claims 1 to 3,
wherein the tray main body (41) includes a connection portion (E) to which a tripod that supports the tray (40) is able to be connected, and
wherein, in the housed state, the connection portion (E) exists between the pair of leg portions (74) when viewed in the third direction.

5. The tray (40) for fusion splicing work according to any one of claims 1 to 4,
wherein the outer surface (75) of the first body contact member (70) includes a curved surface portion protruding in a direction from the outside toward the inside of the tray main body (41).

6. The tray (40) for fusion splicing work according to any one of claims 1 to 5, further comprising:
a second body contact member (80) detachably attached to the tray main body (41) on a side of the one long wall portion (42a) of the pair of long wall portions (42, 42a, 42b) and on a side opposite to the first body contact member (70).

7. The tray (40) for fusion splicing work according to any one of claims 1 to 6,
wherein the tray main body (41) includes
a first attachment portion (44) which is provided on one of the pair of long wall portions (42, 42a, 42b) and to which a belt put around a waist of the operator is able to be attached, and
a second attachment portion (45) which is provided on both of the pair of short wall portions (43, 43a, 43b) and to which a strap put around a neck of the operator is able to be attached.

8. The tray (40) for fusion splicing work according to any one of claims 1 to 7,
wherein at least one wall portion of the pair of long wall portions (42, 42a, 42b) and the pair of short wall portions (43, 43a, 43b) is provided with a notch (46, 47) depressed inside the tray main body (41).

9. A fusion splicer set (110) comprising:
a housing case (1) including the tray (40) for fusion splicing work according to any one of claims 1 to 8; and
a fusion splicer (100) placed on the placement portion (51) of the tray (40),
wherein the tray (40) for fusion splicing work is detachable from the housing case (1).

## Patentansprüche

1. Kassette (40) für eine Fusionsspleißarbeit, die für eine Fusionsspleißarbeit für einen Lichtwellenleiter verwendet wird, umfassend:
einen Kassettenhauptkörper (41) mit einem Paar von langen Wandteilen (42, 42a, 42b), die einander gegenüberliegen und sich entlang einer ersten Richtung erstrecken, und einem Paar von kurzen Wandteilen (43, 43a, 43b), die einander gegenüberliegen und sich entlang einer die erste Richtung kreuzenden zweiten Richtung erstrecken, wobei der Kassettenhauptkörper (41) mit einem Platzierungsteil (51) versehen ist, an dem ein Fusionsspleißer (100) in einem rechteckigen Bereich platziert werden kann, der durch das Paar von langen Wandteilen (42, 42a, 42b) und das Paar von kurzen Wandteilen (43, 43a, 43b) definiert wird, und
ein erstes Körperkontaktglied (70), das eine für einen Kontakt mit dem Körper eines den Fusionsspleißer (100) verwendenden Bedieners konfigurierte Außenfläche (75) umfasst und an dem Kassettenhauptkörper (41) auf der Seite eines langen Wandteils (42a) aus dem Paar von langen Wandteilen (42, 42a, 42b) angebracht ist,
wobei das erste Körperkontaktglied (70) zwischen einem ausgefahrenen Zustand, in dem die Außenfläche (75) in einer die erste Richtung und die zweite Richtung kreuzenden dritten Richtung ausgefahren ist, und einem eingefahrenen Zustand, in dem das erste Körperkontaktglied (70) aus dem ausgefahrenen Zustand eingefahren ist, versetzt werden kann,
**dadurch gekennzeichnet, dass**:
der Kassettenhauptkörper (41) einen ersten Bereich (50), in dem der Platzierungsteil (51) vorgesehen ist, und einen zweiten Bereich (60) auf einer in der dritten Richtung dem ersten Bereich (50) in dem Kassettenhauptkörper (41) gegenüberliegenden Seite umfasst,
das erste Körperkontaktglied (70) mit dem Kassettenhauptkörper (41) über einen Gelenkmechanismus in dem zweiten Bereich (60) verbunden ist, und
in dem ausgefahrenen Zustand das erste Körperkontaktglied (70) einen Hauptkörperteil (73), der sich in der ersten Richtung entlang eines Randteils des einen langen Wandteils (42a) des Kassettenhauptkörpers (41), an dem das erste Körperkontaktglied (70) angebracht ist, erstreckt, und ein Paar von Schenkelteilen (74), die sich in der dritten Richtung weg von dem Kassettenhauptkörper (41) mit beiden Enden des Hauptkörperteils (73) in der ersten Richtung als Basisenden erstrecken, umfasst.

2. Kassette (40) für eine Fusionsspleißarbeit nach Anspruch 1,
wobei die Länge jedes aus dem Paar von Schenkelteilen (74) größer als die Länge des Kassettenhauptkörpers (41) in der dritten Richtung ist.

3. Kassette (40) für eine Fusionsspleißarbeit nach Anspruch 1 oder 2,
wobei in dem ausgefahrenen Zustand die Breite des Hauptkörperteils (73) in der dritten Richtung eine Hälfte oder weniger der Länge jedes aus dem Paar von Schenkelteilen (74) ausmacht.

4. Kassette (40) für eine Fusionsspleißarbeit nach einem der Ansprüche 1 bis 3,
wobei der Kassettenhauptkörper (41) einen Verbindungsteil (E) umfasst, mit dem ein die Kassette (40) haltender Dreifuß verbunden werden kann, und
wobei in dem eingefahrenen Zustand der Verbindungsteil (E), aus der dritten Richtung betrachtet, zwischen dem Paar von Schenkelteilen (74) vorgesehen ist.

5. Kassette (40) für eine Fusionsspleißarbeit nach einem der Ansprüche 1 bis 4,
wobei die Außenfläche (75) des ersten Körperkontaktglieds (70) einen gekrümmten Flächenteil, der in einer Richtung von außen nach innen in den Kassettenhauptkörper (41) vorsteht, umfasst.

6. Kassette (40) für eine Fusionsspleißarbeit nach einem der Ansprüche 1 bis 5, die weiterhin umfasst:
ein zweites Körperkontaktglied (80), das lösbar an dem Kassettenhauptkörper (41) auf einer Seite des einen langen Wandteils (42a) des Paars von langen Wandteilen (42, 42a, 42b) und auf einer zu dem ersten Körperkontaktglied (70) gegenüberliegenden Seite angebracht ist.

7. Kassette (40) für eine Fusionsspleißarbeit nach einem der Ansprüche 1 bis 6,
wobei der Kassettenhauptkörper (41) umfasst:
einen ersten Befestigungsteil (44), der an einem aus dem Paar von langen Wandteilen (42, 42a, 42b) vorgesehen ist und an dem ein um die Taille des Bedieners herum geführter Gurt befestigt werden kann, und
einen zweiten Befestigungsteil (45), der an jedem aus dem Paar von kurzen Wandteilen (43, 43a, 43b) vorgesehen ist und an dem ein um den Hals des Bedieners herum geführter Gurt befestigt werden kann.

8. Kassette (40) für eine Fusionsspleißarbeit nach einem der Ansprüche 1 bis 7,
wobei wenigstens ein Wandteil aus dem Paar von langen Wandteilen (42, 42a, 42b) und dem Paar von kurzen Wandteilen (43, 43a, 43b) mit einer sich in den Kassettenhauptkörper (41) erstreckenden Vertiefung (46, 47) versehen ist.

9. Fusionsspleißsatz (110), umfassend:
ein Aufnahmegehäuse (1), das die Kassette (40) für eine Fusionsspleißarbeit gemäß einem der Ansprüche 1 bis 8 enthält, und
ein Fusionsspleißer (100), der an dem Platzierungsteil (51) der Kassette (40) platziert ist,
wobei die Kassette (40) für eine Fusionsspleißarbeit aus dem Aufnahmegehäuse (1) genommen werden kann.

## Revendications

1. Plateau (40) pour travail d'épissage par fusion qui est utilisé pour le travail d'épissage par fusion pour une fibre optique, comprenant :
un corps principal de plateau (41) comprenant une paire de longues parties de paroi (42, 42a, 42b) opposées entre elles et s'étendant le long d'une première direction, et une paire de courtes parties de paroi (43, 43a, 43b) opposées entre elles et s'étendant le long d'une deuxième direction coupant la première direction, le corps principal de plateau (41) étant prévu avec une partie de mise en place (51) que laquelle une pince à épisser par fusion (100) peut être placée dans une région rectangulaire définie par la paire de longues parties de paroi (42, 42a, 42b) et la paire de courtes parties de paroi (43, 43a, 43b) ; et
un premier élément de contact de corps (70) comprenant une surface externe (75) configurée pour venir en contact avec un corps d'un opérateur utilisant la pince à épisser par fusion (100) et fixée sur le corps principal de plateau (41) sur un côté d'une longue partie de paroi (42a) de la paire de longues parties de paroi (42, 42a, 42b),
dans lequel le premier élément de contact de corps (70) peut effectuer une transition entre un état déplié dans lequel la surface externe (75) est dépliée dans une troisième direction coupant la première direction et la deuxième direction et un état logé dans lequel le premier élément de contact de corps (70) est logé à partir de l'état déplié,
**caractérisé en ce que** :
le corps principal de plateau (41) comprend une première région (50) dans laquelle la partie de mise en place (51) est prévue et une deuxième région (60) sur un côté opposé à la première région (50) dans le corps principal de plateau (41) dans la troisième direction,
le premier élément de contact de corps (70) est raccordé au corps principal de plateau (41) avec un mécanisme de charnière dans la deuxième région (60), et
à l'état déplié, le premier élément de contact de corps (70) comprend une partie de corps principal (73) qui s'étend dans la première direction le long d'une partie de bord de la une longue partie de paroi (42a) du corps principal de plateau (41) à laquelle le premier élément de contact de corps (70) est fixé, et une paire de parties de patte (74) qui s'étend dans la troisième direction à l'opposé du corps principal de plateau (41) avec les deux extrémités de la partie de corps principal (73) dans la première direction en tant qu'extrémités de base.

2. Plateau (40) pour travail d'épissage par fusion selon la revendication 1,
dans lequel une longueur de chacune de la paire de parties de patte (74) est supérieure à une longueur du corps principal de plateau (41) dans la troisième direction.

3. Plateau (40) pour travail d'épissage par fusion selon la revendication 1 ou 2,
dans lequel, à l'état déplié, une largeur de la partie de corps principal (73) dans la troisième direction représente une moitié ou moins d'une longueur de chacune de la paire de parties de patte (74).

4. Plateau (40) pour travail d'épissage par fusion selon l'une quelconque des revendications 1 à 3,
dans lequel le corps principal de plateau (41) comprend une partie de raccordement (E) à laquelle un trépied qui supporte le plateau (40) peut être raccordé, et
dans lequel, à l'état logé, la partie de raccordement (E) existe entre la paire de parties de pied (74), lorsqu'elle est observée dans la troisième direction.

5. Plateau (40) pour travail d'épissage par fusion selon l'une quelconque des revendications 1 à 4,
dans lequel la surface externe (75) du premier élément de contact de corps (70) comprend une partie de surface courbée faisant saillie dans une direction allant de l'extérieur vers l'intérieur du corps principal de plateau (41).

6. Plateau (40) pour travail d'épissage par fusion selon l'une quelconque des revendications 1 à 5, comprenant en outre :
un deuxième élément de contact de corps (80) fixé, de manière détachable, au corps principal de plateau (41) sur un côté de la longue partie de paroi (42a) de la paire de longues parties de paroi (42, 42a, 42b) et sur un côté opposé au premier élément de contact de corps (70).

7. Plateau (40) pour travail d'épissage par fusion selon l'une quelconque des revendications 1 à 6,
dans lequel le corps principal de plateau (41) comprend :
une première partie de fixation (44) qui est prévue sur l'une de la paire de longues parties de paroi (42, 42a, 42b) et à laquelle une courroie placée autour de la taille de l'opérateur peut être fixée, et
une deuxième partie de fixation (45) qui est prévue sur les deux de la paire de courtes parties de paroi (43, 43a, 43b) et à laquelle une sangle placée autour du cou de l'opérateur peut être fixée.

8. Plateau (40) pour travail d'épissage par fusion selon l'une quelconque des revendications 1 à 7,
dans lequel au moins une partie de paroi parmi la paire de longues parties de paroi (42, 42a, 42b) et la paire de courtes parties de paroi (43, 43a, 43b) est prévue avec une encoche (46, 47) enfoncée à l'intérieur du corps principal de plateau (41).

9. Ensemble de pince d'épissage par fusion (110) comprenant :
un boîtier de logement (1) comprenant le plateau (40) pour le travail d'épissage par fusion selon l'une quelconque des revendications 1 à 8 ; et
une pince d'épissage par fusion (100) placée sur la partie de mise en place (51) du plateau (40),
dans lequel le plateau (40) pour le travail d'épissage par fusion peut être détaché du boîtier de logement (1).
